# EUROPÄISCHE PATENTSCHRIFT

(11) **EP 1 853 447 B1**
(45) Veröffentlichungstag und Bekanntmachung des Hinweises auf die Patenterteilung: **21.09.2011**
(21) Anmeldenummer: 06705884.2
(22) Anmeldetag: 02.02.2006
(51) Int. Cl.: B60J 7/14, B60J 7/20, B60J 7/12

(54) **KRAFTFAHRZEUG MIT EINEM ZUMINDEST TEILWEISE BEWEGLICHEN DACH**
MOTOR VEHICLE WITH AN AT LEAST PARTLY MOBILE ROOF
VEHICULE COMPRENANT AU MOINS UN TOIT SENSIBLEMENT MOBILE

(30) Priorität: 12.02.2005 DE 102005006435
(43) Veröffentlichungstag der Anmeldung: 14.11.2007
(73) Patentinhaber: Wilhelm Karmann GmbH, 49084 Osnabrück (DE)
(72) Erfinder: KREILING, Nils, 49078 Osnabrück (DE)
(74) Vertreter: Kronthaler, Schmidt & Coll.
(86) Internationale Anmeldenummer: PCT/DE2006/000155
(87) Internationale Veröffentlichungsnummer: WO 2006/084433

(56) Entgegenhaltungen:
- EP-A- 1 285 795
- EP-A- 1 588 881
- DE-A1- 1 945 559
- US-A- 3 271 067
- US-A1- 2002 079 718
- US-A1- 2004 155 479
- US-B1- 6 290 281

## Beschreibung

Die Erfindung betrifft ein Kraftfahrzeug mit einem Dach, das zumindest teilweise beweglich ist, nach dem Oberbegriff des Anspruchs 1.

Um insbesondere auch bei Kraftfahrzeugen mit langen Insassenräumen mit zwei oder mehr Sitzreihen, etwa bei Steilheckfahrzeugen wie Geländewagen, eine zumindest teilweise Dachöffnung zu ermöglichen, sind sowohl Festdächer mit zumindest drei bei geschlossenem Dach aufeinander folgenden, jeweils in sich starren Dachteilen bekannt als auch Dächer mit einem flexiblen, mit einem Bezug bespannten Bereich.

Die EP 1 588 881 A1, die unter Art. 54(3) EPÜ fällt, zeigt ein Kraftfahrzeug mit einem Dach, das bereichsweise beweglich ist, wobei der bewegliche Bereich an starren und auch in Öffnungsstellung des beweglichen Bereichs oberhalb von Seitenscheiben verbleibenden Seitenrahmen der Karosserie - ähnlich wie bei einem Schiebedach - geführt ist. Der bewegliche Dachbereich umfaßt teilweise starre und teilweise flexibel einfaltbare Abschnitte.

Der Erfindung liegt das Problem zugrunde, bei einem Vollcabriolet-Fahrzeug eine möglichst platzsparende Halterung der Dachteile in ihrer geöffneten Stellung zu erreichen.

Die Erfindung löst dieses Problem durch ein als Vollcabriolet-Fahrzeug ausgebildetes Kraftfahrzeug mit den Merkmalen des Anspruchs 1. Hinsichtlich vorteilhafter Ausgestaltungen und Weiterbildungen der Erfindung wird auf die weiteren Ansprüche 2 bis 11 verwiesen.

Durch die Erfindung ist für ein Vollcabriolet-Fahrzeug mit einem flexiblen Dachbereich eine Dachöffnung ermöglicht, bei der der flexible Dachbereich in seiner geöffneten Stellung nach oben hin abgedeckt ist, ohne daß es eines separaten Deckelteils hierfür bedarf. Dadurch, daß die Abdeckung durch Teile des Daches selbst gebildet ist, ist die Höhenerstreckung des abgelegten Dachpakets gering, so daß die Raumausnutzung verbessert ist.

In der Weiterbildung nach Anspruch 2 ist eine derart gute Raumausnutzung auch für ein Fahrzeug mit zumindest drei öffnungsfähigen, an ihrer Außenfläche voneinander getrennten Dachteilen ermöglicht, wobei auch hier ein zusätzlicher flexibler Dachbereich vorgesehen sein kann. Dadurch, daß die abdeckenden Dachteile in geöffneter Stellung fluchtend hintereinander liegen, können sie eine lange Fläche überdecken und benötigen zudem nur eine minimierte Höhe.

Wenn vorteilhaft an den oder die nach Art eines Deckels liegenden Dachteil(e) heckwärts eine nahezu vertikale Kofferraumklappe anschließt, kann diese zusammen mit dem oder den oberseitig überdeckenden Plattenteil(en) des Daches einen Kofferraum dicht umgrenzen, insbesondere dann, wenn bei geöffnetem Dach der oder die abdeckende(n) Dachteil(e), den darunter liegenden Dachbereich vollständig überdecken.

Bei geschlossenem Dach kann das Fahrzeug im hecknahen Abschnitt eine seitliche Linie nach Art eines Kombis und bei vollständig geöffnetem Dach eine seitliche Linie nach Art eines Stufenheckfahrzeugs aufweisen, so daß bei geschlossenem Dach eine Vergrößerung des Kofferraums nach oben hin ermöglicht ist und die Erfindung insbesondere für Kombis, Vans oder Geländewagen nutzbar ist.

Sofern das Fahrzeug einen flexiblen und einen separat an die Karosserie angebundenen Dachbereich mit starren Dachteilen umfaßt, kann vorteilhaft eine Dachstellung ermöglicht sein, bei der nur ein hinterer, mit einem Bezug versehener flexibler Dachbereich geöffnet und der vorgeordnete, starre Dachteile umfassende Dachbereich noch oberhalb des Insassenraums gelegen ist. Die Bewegungen der Dachbereiche können dann über auch räumlich getrennte und jeweils für sich nur geringen Bauraum beanspruchende Getriebe ermöglicht sein.

Eine zusätzliche Teilöffnung nach Art eines Schiebedachs ist möglich, wenn während der Fahrt im geschlossenen Zustand horizontal liegende Dachteile übereinander verlagerbar sind.

Für ein besonders gutes Freiluftgefühl kann das erfindungsgemäße Fahrzeug ein Vollcabriolet-Fahrzeug sein. Alternativ ist auch möglich, daß zum Beispiel oberhalb von seitlichen Scheiben Rahmenteile stehenbleiben.

Die separate Anbindung des hier vorne liegenden Dachbereichs mit starren Dachteilen ist optisch und mechanisch günstig realisierbar, wenn dieser einen von einer Fensterbrüstungslinie aufragenden Säulenteil aufweist, an den zumindest ein vorgeordneter Plattenteil angehängt ist. Insbesondere kann der Säulenteil bei der Bewegung des Dachbereichs nach Art eines Schwenkhebels für den oder die vorgeordneten Plattenteil(e) wirken und auch einen Überrollschutz umfassen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische Seitenansicht eines er- findungsgemäßen Fahrzeugs in viertüriger Ausbildung mit einem hinten gelegenen fle- xiblen Dachbereich und einem bezüglich der Fahrtrichtung weiter vorne gelegenen Dach- bereich mit starren Dachteilen bei ge- schlossenem Dach,
- Fig. 2: das Fahrzeug nach Fig. 1 in an der verti- kalen Längsmittelebene abgeschnittener An- sicht von oben,
- Fig. 3: eine ähnliche Ansicht wie Fig. 1 nach Öff- nung des flexiblen hinteren Dachbereichs,
- Fig. 4: eine ähnliche Ansicht wie Fig. 3 während der Öffnung auch des Dachbereichs mit star- ren Dachteilen und mit zusätzlich angedeu- tetem Aufschwenken der Kofferraumklappe,
- Fig. 5: eine ähnliche Ansicht wie Fig. 4 bei voll- ständig geöffnetem Dach,
- Fig. 6: einen Schnitt entlang der Linie VI-VI in Fig. 1,
- Fig. 7: einen Schnitt entlang der Linie VII-VII in Fig. 2.

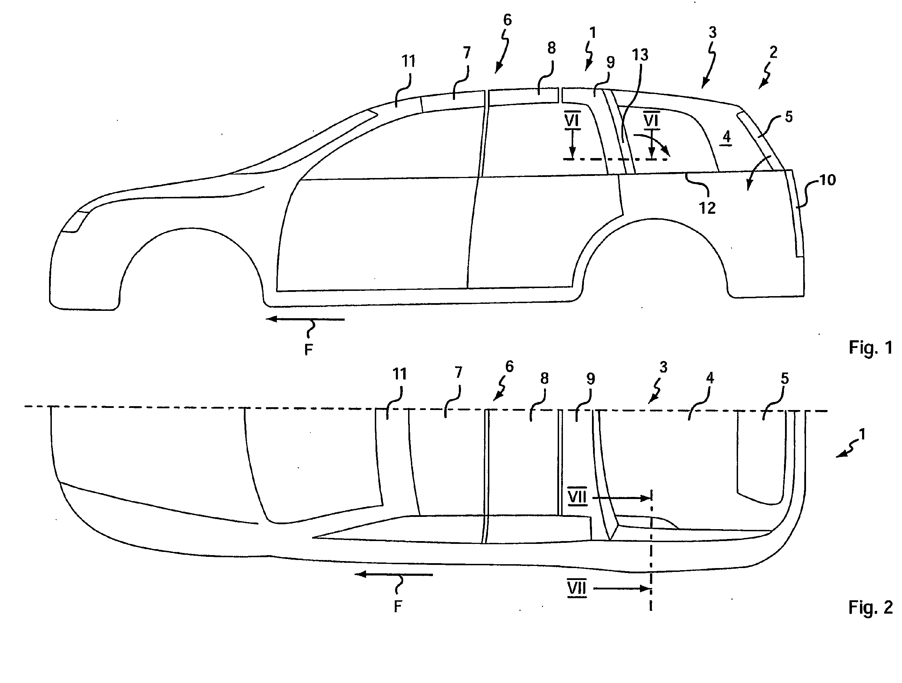

Das erfindungsgemäße Kraftfahrzeug 1 ist im Ausführungsbeispiel als viertüriges Fahrzeug mit einer Steilheckausbildung bei geschlossenem Dach 2 nach Figur 1 dargestellt. Dies ist nicht zwingend.

Das Fahrzeug 1 umfaßt in dieser Steilheckausbildung einen flexiblen hinteren Dachbereich 3, der mit einem Bezug 4 und einer Heckscheibe 5 versehen ist, und einen hier drei starre Dachteile 7, 8, 9 umfassenden vorderen Dachbereich 6. Aufgrund der erheblichen möglichen Dachlänge durch zumindest drei in geschlossener Stellung aufeinander folgende starre Dachteile 7, 8, 9 ist ein solches Fahrzeug 1 in jedem Fall geeignet, einen großen Insassenraum mit vier oder mehr Sitzplätzen in zwei oder drei Sitzreihen bereitzustellen. Sowohl der hintere 3 als auch der vordere Dachbereich 6 sind beweglich an die Karosserie angebunden. Für die Dachöffnung ist daher kein manuelles Entnehmen von Teilen des Daches 2 erforderlich.

Der vordere Dachbereich 6 mit seinen in sich starren Dachteilen 7, 8, 9 kann überwiegend transparent ausgebildet sein. Auch jeweils bezogene und einen starren Rahmen ausbildende Teile wären möglich. In jedem Fall bilden die Dachteile 7, 8, 9 an ihren Außenflächen voneinander getrennte Einheiten aus. Die Plattenteile 7, 8 weisen in Fahrzeuglängsrichtung nahezu keine Wölbung auf und liegen in ihrer geschlossenen Stellung im wesentlichen horizontal über dem Insassenraum. Zur Bewirkung einer Teilöffnung kann (nicht gezeichnet) während der Fahrt zumindest der erste bachteil 7 über oder unter den dahinter liegenden Dachteil 8 verlagerbar sein.

In einer alternativen Ausbildung (ebenfalls nicht gezeichnet) könnte auch der hintere starre Dachteil 9 ein Heckfenster 5 umfassen und den hinteren Dachabschluß bilden, ohne daß ein flexibler Dachbereich 3 vorgesehen wäre. Dann könnte auch bei geschlossenem Fahrzeug die Dachlinie nach Art eines Stufenheckfahrzeugs oder eines Pick-up-Fahrzeugs mit Laderaumabdeckung ausgebildet sein.

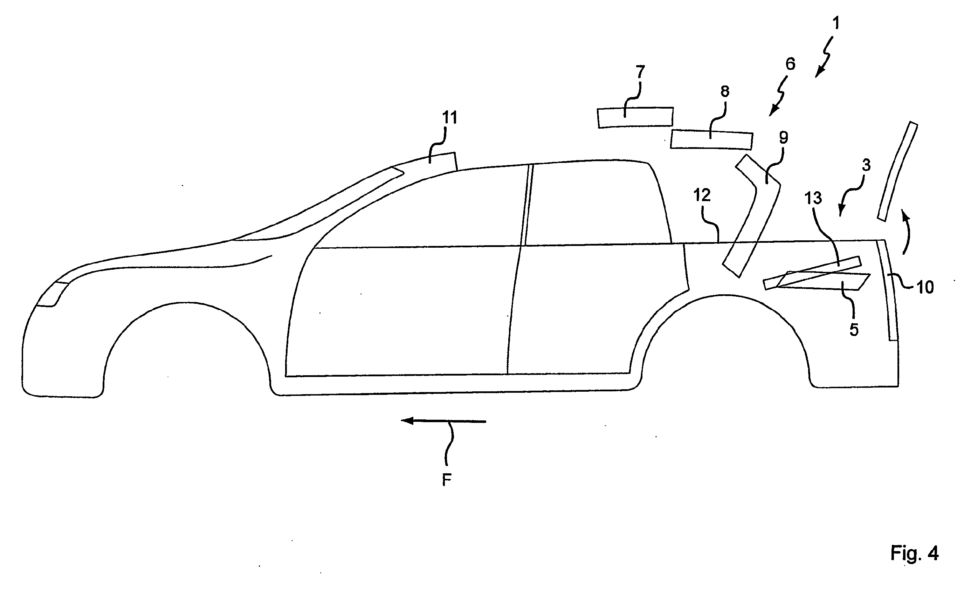

Heckseitig ist gemäß der Zeichnung eine im geschlossenen Zustand zumindest nahezu vertikal stehende und nach unten oder - wie hier in Fig. 4 dargestellt - nach oben schwenkbare Kofferraumklappe 10 vorgesehen.

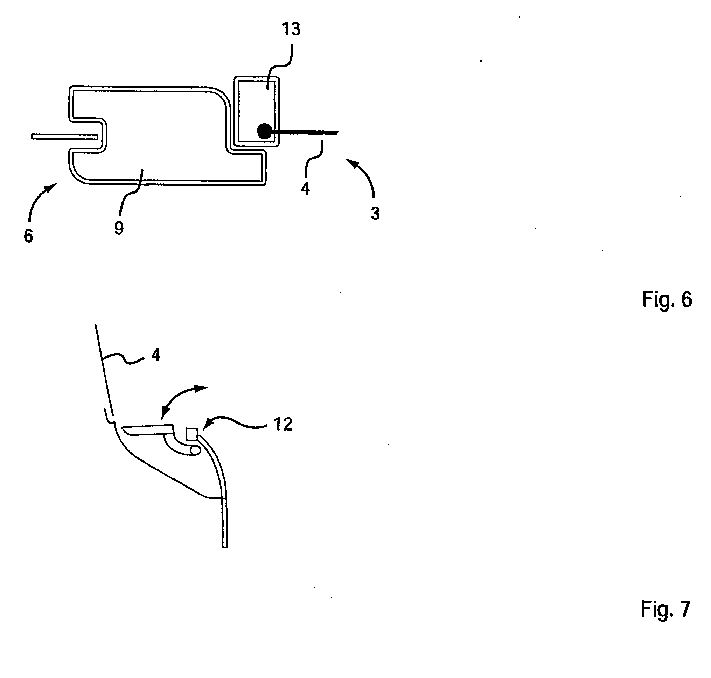

Der flexible Dachbereich 3 ist an der Dachaußenfläche vollständig von dem starre Teile 7, 8, 9 umfassenden Dachbereich 6 getrennt und weist auch ein eigenes Antriebsgetriebe auf, so daß beide Dachbereiche 3, 6 getrennt voneinander beweglich sind. Die Anbindung des Bezuges des hinteren Dachteils 3 ist in Fig. 7 dargestellt. Es wird deutlich, daß der Bezug unterhalb der Fensterbrüstungslinie 12 umlaufend fest angebunden ist und daher durch Aufstellen des Spannbügels 13 automatisch gespannt wird.

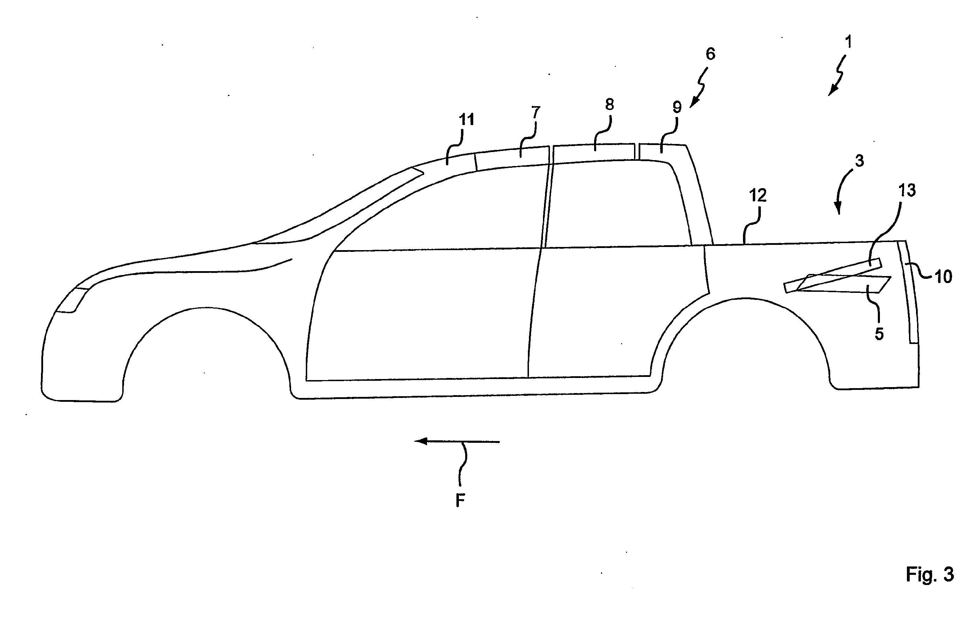

Das Fahrzeug 1 kann eine Dachstellung ermöglichen, bei der nur der flexible hintere Dachbereich 3 geöffnet und unterhalb der Fensterbrüstungslinie 12 abgelegt ist, während hingegen der vorgeordnete Dachbereich 6 geschlossen oberhalb des Insassenraums gelegen ist (Fig. 3).

Bei vollständiger Öffnung auch des vorderen Dachbereichs 6 ist eine vom Windschutzscheibenrahmen 11 bis zur Kofferraumklappe 10 reichende Freistellung erreicht, so daß ohne verbleibende seitliche Rahmen ein Vollcabriolet-Fahrzeug geschaffen ist.

Der starre Dachteile 7, 8, 9 umfassende Dachbereich 6 weist einen von der Fensterbrüstungslinie 12 aufragenden Säulenteil 9 auf, an den zumindest ein vorgeordneter Plattenteil 7,8 beweglich angehängt ist. Der Säulenteil 9 oder ein von diesem überdecktes Gestänge wirkt bei der Bewegung des Dachbereichs 6 nach Art eines Schwenkhebels für den oder die vorgeordneten Plattenteil(e) 7, 8, so daß diese durch heckwärtiges Verschwenken des Säulenteils 9 mit abwärts verlagert werden. An den Säulenteil 9, der mit einem Querträger durchgehend über.die gesamte Fahrzeugbreite fortgesetzt sein und auch einen Überrollschutz umfassen kann, ist bei geschlossenem Dach 2 (Fig. 1) ein Spannbügel 13 des flexiblen Dachbereichs 3 dichtend angelehnt (Fig. 6).

Zur Dachöffnung wird zunächst der Spannbügel 13 von der Anlagestellung gelöst und abwärts verschwenkt, wobei die Heckscheibe 5 um eine hintere feste Anbindung des Bezugs des Dachbereichs 3 nach vorne geschwenkt wird, so daß der flexible Dachbereich 3 in die geöffnete Stellung nach Fig. 3 überführt wird. In dieser liegt die Heckscheibe 5 unterhalb des Spannbügels 13, und beide Teile liegen im wesentlichen horizontal im oberen Kofferraumbereich.

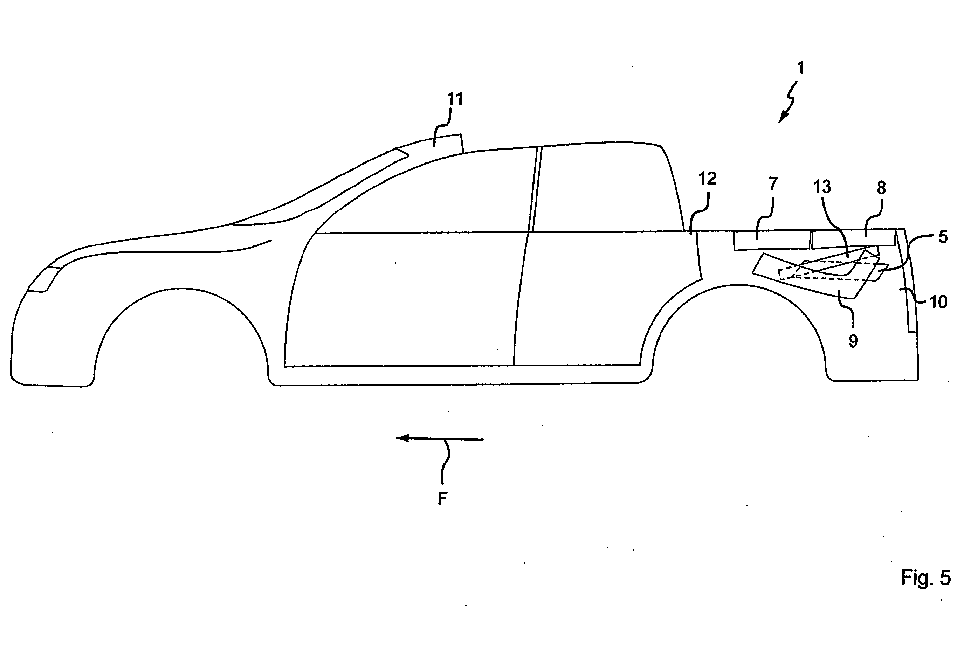

Parallel zu dieser Ablage des hinteren Dachbereichs 3 oder vollständig danach kann die Öffnung des vorderen Dachbereichs 6 erfolgen, bei der durch Verschwenken des Säulenteils 9 (Fig. 4) die Plattenteile 7, 8 zunächst gegeneinander öffnen, um auch während der Bewegung eine hinreichende Kopffreiheit auch der Hintensitzenden zu erhalten. In geöffneter Stellung hingegen liegen die Plattenteile 7, 8 dann wieder parallel und fluchtend hintereinander in Fortsetzung der Fensterbrüstungslinie 12. Dabei übergreifen sie den flexiblen Dachbereich 3 wie auch den Säulenteil 9, der am Ende der Öffnungsbewegung ebenfalls im wesentlichen horizontal liegt, nach Art eines von außen sichtbaren Deckels (Fig. 5), ohne daß darüber noch ein Karosseriedeckel vorgesehen sein müßte.

Die liegenden Dachteile 9 und 3 sind vollständig überdeckt, wobei auch zu den Seiten und nach hinten zur Kofferraumklappe 10 eine Abdichtung vorgesehen sein kann, die darunter einen komplett dichten Koffer- und Verdeckaufnahmeraum ermöglicht.

Bei vollständig geöffnetem Dach ergibt sich durch die Horizontallage der Dachteile 7, 8 in Höhe der Fensterbrüstungslinie 12 eine elegante seitliche Linie nach Art eines Stufenheckfahrzeugs.

Die Dachbereiche 3, 6 können für die geschilderten Bewegungen manuell oder voll- oder teilautomatisch zu bewegen sein.

## Patentansprüche

1. Kraftfahrzeug (1) mit einem Dach (2), das zumindest teilweise beweglich ist und einen flexiblen, mit einem Bezug versehenen Dachbereich (3) aufweist, wobei das Kraftfahrzeug (1) als Vollcabriolet-Fahrzeug ausgebildet ist,
**dadurch gekennzeichnet,**
**daß** das Dach (2) einen weiteren, von dem flexiblen Bereich (3) getrennten und jeweils in sich starre Dachteile (7;8;9) umfassenden Dachbereich (6) aufweist, wobei bewegliche Dachteile (7;8;9) in Fahrzeugquerrichtung bis zu den Oberkanten von Seitenscheiben reichen und wobei in vollständig geöffneter Dachstellung der flexible Dachbereich (3) unterhalb zumindest eines diesen nach Art eines Deckels überdeckenden starren Dachteils (7;8) gelegen ist.

2. Kraftfahrzeug (1) nach Anspruch 1,
**dadurch gekennzeichnet,**
**daß** dieses zumindest drei öffnungsfähige, an ihrer Außenfläche voneinander getrennte Dachteile (7;8;9) umfaßt, die bei ihrer vollständigen Öffnung im hinteren Fahrzeugbereich ablegbar sind, wobei in geschlossener Stellung zumindest zwei Dachteile (7;8) im wesentlichen horizontal oberhalb eines Insassenraums liegen, diese Dachteile (7;8) in geöffneter Stellung fluchtend hintereinander liegen und dabei zumindest einen weiteren geöffneten Dachteil (9;3) nach Art eines von außen sichtbaren Deckels übergreifen.

3. Kraftfahrzeug (1) nach einem der Ansprüche 1 oder 2,
**dadurch gekennzeichnet,**
**daß** an den oder die nach Art eines Deckels liegenden Dachteil(e) (7;8) heckwärts eine nahezu vertikale Kofferraumklappe (10) anschließt.

4. Kraftfahrzeug (1) nach einem der Ansprüche 1 bis 3,
**dadurch gekennzeichnet,**
**daß** bei geöffnetem Dach (2) der oder die abdeckende(n) Dachteil(e) (7;8) die darunter liegenden Dachteile (9;3) vollständig überdecken.

5. Kraftfahrzeug (1) nach einem der Ansprüche 1 bis 4,
**dadurch gekennzeichnet,**
**daß** das Fahrzeug (1) bei vollständig geschlossenen Dach (2) im hecknahen Abschnitt eine seitliche Linie nach Art eines Steilhecks und bei vollständig geöffnetem Dach (2) eine seitliche Linie nach Art eines Stufenheckfahrzeugs oder Pick-up-Fahrzeugs mit Laderaumabdeckung aufweist.

6. Kraftfahrzeug (1) nach einem der Ansprüche 1 bis 5,
**dadurch gekennzeichnet,**
**daß** das Fahrzeug (1) eine Dachstellung ermöglicht, bei der nur ein hinterer, mit einem Bezug versehener Dachbereich (3) geöffnet und ein vorgeordneter, starre Dachteile (7;8;9) umfassender Dachbereich (6) oberhalb des Insassenraums gelegen ist.

7. Kraftfahrzeug (1) nach einem der Ansprüche 1 bis 6,
**dadurch gekennzeichnet,**
**daß** während der Fahrt im geschlossenen zustand horizontal liegende Dachteile (7;8) übereinander verlagerbar sind.

8. Kraftfahrzeug (1) nach einem der Ansprüche 2 bis 7,
**dadurch gekennzeichnet,**
**daß** dieses ein Vollcabriolet-Fahrzeug ist.

9. Kraftfahrzeug (1) nach einem der Ansprüche 1 bis 8,
**dadurch gekennzeichnet,**
**daß** der jeweils in sich starre Dachteile (7;8;9) umfassende Dachbereich (6) einen von einer Fensterbrüstungslinie (12) aufragenden Säulenteil (9) aufweist, an den zumindest ein vorgeordneter Plattenteil (7;8) angehängt ist.

10. Kraftfahrzeug (1) nach Anspruch 9,
**dadurch gekennzeichnet,**
**daß** der Säulenteil (9) bei der Bewegung des Dachbereichs nach Art eines Schwenkhebels für den oder die vorgeordneten Plattenteil(e) (7;8) wirkt.

11. Kraftfahrzeug (1) nach einem der Ansprüche 9 oder 10,
**dadurch gekennzeichnet,**
**daß** der Säulenteil (9) einen Überrollschutz umfaßt.

## Claims

1. A motor vehicle (1) with a roof (2) which is at least partly movable and comprises a flexible roof part (3) provided with a cover, said motor vehicle (1) being provided as a full convertible, **characterised in that** the roof (2) comprises a further part (6) which is separated from the flexible part (3) and comprises inherently rigid roof elements (7; 8; 9), wherein movable roof elements (7; 8; 9) extend up to the upper edges of side windows in the transverse vehicle direction and wherein, when the roof is in its fully opened position, the flexible roof part (3) is located below at least one rigid roof element (7; 8) covering said flexible roof part (3) in the manner of a lid.

2. The motor vehicle (1) according to claim 1, **characterised in that** it comprises at least three openable roof elements (7; 8; 9) which are separated from each other on their outer surfaces and can be stowed in the rear vehicle portion when they are fully opened, wherein at least two roof elements (7; 8) are located substantially horizontally above a passenger compartment in the closed position, said roof elements (7; 8) being arranged behind each other in mutual alignment in the opened position and span at least one further opened roof element (9; 3) in the manner of a lid which is visible from the outside.

3. The motor vehicle (1) according to any one of claims 1 or 2, **characterised in that** a nearly vertical boot lid (10) rearwardly adjoins the roof element(s) (7; 8) which is/are arranged in the manner of a lid.

4. The motor vehicle (1) according to any one of claims 1 to 3, **characterised in that**, when the roof (2) is open, the covering roof element(s) (7; 8) fully cover(s) the roof elements (9; 3) located below.

5. The motor vehicle (1) according to any one of claims 1 to 4, **characterised in that**, when the roof (2) is fully closed, the vehicle (1) comprises a lateral line in the manner of a hatchback in the portion near its rear end and, when the roof (2) is fully opened, the vehicle (1) comprises a lateral line in the manner of a notchback vehicle or pick-up vehicle with a cargo bay cover.

6. The motor vehicle (1) according to any one of claims 1 to 5, **characterised in that** the vehicle (1) allows a roof position in which only a rear roof part (3), provided with a cover, is opened and a front roof part (6) comprising rigid roof elements (7; 8; 9) is located above the passenger compartment.

7. The motor vehicle (1) according to any one of claims 1 to 6, **characterised in that** roof elements (7; 8), which extend horizontally in the closed state, can be moved over one another when the vehicle (1) is moving.

8. The motor vehicle (1) according to any one of claims 2 to 7, **characterised in that** it is a full convertible.

9. The motor vehicle (1) according to any one of claims 1 to 8, **characterised in that** the roof part (6), which comprises inherently rigid roof elements (7; 8; 9), comprises a column part (9) extending upward from a window sill line (12) and having at least one front plate part (7; 8) attached to it.

10. The motor vehicle (1) according to claim 9, **characterised in that** the column part (9) acts in the manner of a pivoting lever for the front plate part(s) (7; 8) during the movement of the roof part.

11. The motor vehicle (1) according to any one of claims 9 or 10, **characterised in that** the column part (9) comprises a rollover protection device.

## Revendications

1. Véhicule automobile (1) avec un toit (2) qui est au moins partiellement déplaçable et comprend une partie de toit flexible (3) présentant un recouvrement, ledit véhicule automobile (1) étant réalisé sous la forme d'un cabriolet propre,
**caractérisé en ce que** le toit (2) comprend une partie additionnelle (6) qui est séparée de la partie flexible (3) et comprend des éléments de toit (7; 8; 9) rigides en soi, des éléments de toit déplaçables (7; 8; 9) s'étendant jusqu'au bords supérieurs de fenêtres latérales dans la direction transversale du véhicule et, lorsque le toit se trouve en position complètement ouverte, la partie de toit flexible (3) est disposée au-dessous d'au moins un élément de toit rigide (7; 8) couvrant ladite partie de toit flexible (3) à la manière d'un couvercle.

2. Véhicule automobile (1) selon la revendication 1, **caractérisé en ce qu'**il comprend au moins trois éléments de toit ouvrables (7; 8; 9) qui sont séparés les uns des autres à leur faces extérieures et sont escamotables à l'arrière du véhicule lorsqu'ils sont complètement ouverts, au moins deux éléments de toit (7; 8) étant disposés, en position fermée, sensiblement horizontalement au-dessus d'un habitacle, lesdits éléments de toit (7; 8) étant alignés les uns derrière les autres en position ouverte et couvrant, à la manière d'un couvercle visible de l'extérieur, au moins une autre partie de toit ouverte (9; 3).

3. Véhicule automobile (1) selon l'une quelconque des revendications 1 ou 2, **caractérisé en ce qu'**une trappe de coffre à bagages (10) presque verticale est contiguë en arrière à l'élément de toit ou aux éléments de toit (7; 8) disposé(s) à la manière d'un couvercle.

4. Véhicule automobile (1) selon l'une quelconque des revendications 1 à 3, **caractérisé en ce que**, lorsque le toit (2) est ouvert, le ou les élément(s) de toit (7; 8) couvrants couvre(nt) complètement les parties de toit (9; 3) disposées en dessous.

5. Véhicule automobile (1) selon l'une quelconque des revendications 1 à 4, **caractérisé en ce que**, lorsque le toit (2) est complètement fermé, le véhicule (1) présente une ligne latérale à la manière d'un break dans la région près de son extrémité arrière et, lorsque le toit (2) est complètement ouvert, le véhicule (1) présente une ligne latérale à la manière d'un véhicule à trois volumes ou d'un pick-up avec une couverture d'espace de chargement.

6. Véhicule automobile (1) selon l'une quelconque des revendications 1 à 5, **caractérisé en ce que** le véhicule (1) permet une position de toit dans laquelle seulement une partie de toit arrière (3) présentant un recouvrement est ouverte et une partie de toit avant (6), comprenant des éléments de toit (7; 8; 9) rigides, est située au-dessus de l'habitacle.

7. Véhicule automobile (1) selon l'une quelconque des revendications 1 à 6, **caractérisé en ce que** des éléments de toit (7; 8), qui s'étendent en direction horizontale en état fermé, peuvent être déplacés les uns au-dessus des autres quand le véhicule (1) est en marche.

8. Véhicule automobile (1) selon l'une quelconque des revendications 2 à 7, **caractérisé en ce qu'**il est réalisé sous la forme d'un cabriolet propre.

9. Véhicule automobile (1) selon l'une quelconque des revendications 1 à 8, **caractérisé en ce que** la partie de toit (6), qui comprend des éléments de toit (7; 8; 9) rigides en soi, comprend une partie de montant (9) s'étendant vers le haut à partir d'une ligne de caisse (12) et au moins une partie de plaque (7; 8) reliée à cette première.

10. Véhicule automobile (1) selon la revendication 9, **caractérisé en ce que**, lors du déplacement de ladite partie de toit, la partie de montant (9) fonctionne à la manière d'un levier de pivotement pour la ou les partie(s) de plaque (7; 8) avant(s).

11. Véhicule automobile (1) selon l'une quelconque des revendications 9 ou 10, **caractérisé en ce que** la partie de montant (9) comprend un dispositif de protection anti-retournement.
